Europäisches Patentamt

(19) European Patent Office

Office européen des brevets

(11) Veröffentlichungsnummer: **0 242 594**
**B1**

(12) # EUROPÄISCHE PATENTSCHRIFT

(45) Veröffentlichungstag der Patentschrift:
17.01.90

(51) Int. Cl. ⁴: **B 65 B 61/24**

(21) Anmeldenummer: 87104059.8

(22) Anmeldetag: 19.03.87

(54) Egalisier-Vorrichtung.

(30) Priorität: 22.03.86 DE 3609786

(43) Veröffentlichungstag der Anmeldung:
28.10.87 Patentblatt 87/44

(45) Bekanntmachung des Hinweises auf die Patenterteilung:
17.01.90 Patentblatt 90/03

(84) Bennante Vertragsstaaten:
AT BE CH DE ES FR GB GR IT LI LU NL SE

(56) Entgegenhaltungen:
GB-A-2 108 071
US-A-2 877 704
US-A-3 526 078

(73) Patentinhaber: Harro Höfliger Verpackungsmaschinen GmbH
Helmholtzstrasse 4
D-7151 Allmersbach im Tal (DE)

(72) Erfinder: Reiser, Manfred, Dipl.-Ing. (FH)
Müllersgasse 3
D-7057 Winnenden (DE)

(74) Vertreter: Müller, Hans
Lerchenstrasse 56
D-7100 Heilbronn (DE)

## Beschreibung

## Technisches Gebiet

Die Erfindung betrifft eine Vorrichtung zum Egalisieren von allseitig verschlossenen, mit Lebensmittelteilchen unterschiedlicher Art und Größe gefüllten Beuteln.

Derartige sogenannte Flachbeutel gibt es beispielsweise als Fertigsuppen-Beutel. Das Herstellen, Füllen und Verschließen der Flachbeutel erfolgt auf vollautomatisch arbeitenden Maschinen. Die flache Beutelform zusammen mit dem teils mehligen, teils körnigen oder sogar bröckchenweise vorhandenen Füllgut bringen es mit sich, daß das Füllgut nach dem Verfüllen und Verschließen des Beutels ungleichmäßig in dem Beutel verteilt ist. Ungleichmäßig dicke Beutel lassen sich aber nur sehr schwer übereinandergestapelt in einen Umkarton hineinbringen. Außerdem ist die maximale Dicke eines einzelnen, ungleichmäßig gefüllten Beutels größer als die eines gleichmäßig gefüllten Beutels, so daß ungleich dicke Beutel einen größeren Umkarton benötigen als gleichmäßig dicke Beutel.

## Stand der Technik

Aus der DE-B-1 077 135 ist eine Vorrichtung zum Abflachen von mit pulverigem oder körnigem Material gefüllten oder geschlossenen Säcken oder Beuteln mit einer auf die Breitseite der Säcke einwirkenden Vibrationseinrichtung bekannt. Die Vibrationseinrichtung beinhaltet einen Vibrationstisch, auf dem die zu egalisierenden Säcke oder Beutel während ihres Vorschubs aufliegen. Oberhalb des Vibrationstisches ist eine Platte vorhanden, die während der Vibration und des Vorschubs von oben auf die Beutel drückend einwirkt. Die Beutel bewegen sich damit längs einer Ebene, die in Transportrichtung und senkrecht zu derselben ausgerichtet ist. Diese Egalisiervorrichtung hat den Nachteil, daß durch den in vertikaler Richtung auf den Beutel ausgeübten Preßvorgang größere Lebensmittelbrocken innerhalb des in dem Beutel vorhandenen Füllgutes zerdrückt werden können, was sowohl aus Sicht der Lebensmittel-Hersteller als auch aus Sicht der Verbraucher höchst unerwünscht ist; die Qualität des Füllgutes wird nämlich vom Verbraucher umso höher bewertet, je größer die einzelnen Lebensmittelteilchen innerhalb des Beutels sind. Sofern die größeren Lebensmittelbrocken beim Egalisieren nicht zermahlen bzw. zerdrückt werden, besteht darüber hinaus mit dieser bekannten Vorrichtung die Gefahr, daß die Teilchen sich durch den Egalisiervorgang in die Beutelhülle gleichsam einstanzen, was zumindest aus optischen Gründen unschön ist; darüber hinaus kann dadurch sogar die Beutelhülle zerstört werden.

Aus der US-A-3 526 078 ist eine Vorrichtung zum Verdichten von Packungen bekannt.

Während des Verdichtens wird die Packung zwischen einem oberen und unteren Förderband hindurchtransportiert. Das Verdichten erfolgt dadurch, daß das obere Förderband gegen das untere Förderband bewegt wird, wodurch die dazwischen sich befindende Packung planmäßig zusammengequetscht wird. Damit muß auch bei dieser Vorrichtung auf den Packungsinhalt stark drückend eingewirkt werden, was bei Vorhandensein von Lebensmittelteilchen unterschiedlicher Art und Größe die vorstehend aufgeführten nachteiligen Folgen haben würde.

Zur Vermeidung dieser im Zusammenhang mit dem Egalisieren von mit Lebensmittelteilchen gefüllten Beuteln bekannten Nachteile wird bei der aus der GB-A-2 108 071 bekannten Vorrichtung zum Transportieren von Beutelpackungen das die Beutel transportierende Förderband während des Egalisiervorganges in Transportrichtung mehrmals beschleunigt und verzögert. Bei dieser Transportbewegung verschiebt sich der Beutelinhalt innerhalb des Beutels mit weitgehend unkontrollierbarem Ergebnis; eine Anhäufung des Beutelinhalts in Teilbereichen des Beutels läßt sich nicht bei jeder Art und Zusammensetzung des Füllguts mit Sicherheit vermeiden.

Aus der DE-A-3 417 063 ist ferner eine Sackwendeeinrichtung bekannt, mit der ein Sack in eine bestimmte Form gebracht werden soll. Während der Formgebung ruht der Sack auf einem stillstehenden Förderband auf. Der Sack wird über eine auf das Förderband einwirkende Rütteleinrichtung in vertikale Schwingbewegung gebracht, wobei von oben eine Platte an ihm auflagert, die eine Taumelbewegung ausführt. Der Sack wird ferner seitlich zwischen zwei Backen eingeklemmt, die jeweils in eine horizontale Schwingbewegung versetzt werden können. Diese seitlichen Backen versetzen den Sack und damit auch dessen Inhalt nicht insgesamt in eine horizontale Hin- und Herbewegung, da diese Schwingbewegung lediglich auf die seitlichen Wände des Sackes einwirkt; es werden lediglich die an diesen seitlichen Wänden vorhandenen Füllgutteilchen in horizontaler Richtung von den seitlichen Wänden weggedrückt. Diese Teilchen werden dabei in das Innere des Sackes hineingeschleudert, so daß in dem mittleren Bereich des Sackes eine Anhäufung von Füllgutteilchen stattfindet. Auf das Füllgut wird damit von drei Seiten drückend in einer Art und Weise eingewirkt, die zerbrechliches Füllgut wie z. B. Kartoffel-Chips beschädigen würde.

## Darstellung der Erfindung

Ausgehend von der vorbekannten GB-A 2 108 071 wird zur Überwindung der o. g. Nachteile eine Vorrichtung zum Egalisieren von allseitig verschlossenen, mit Lebensmittelteilchen unterschiedlicher Art und Größe gefüllten Beuteln vorgeschlagen, mit der mit einfachen technischen Mitteln eine hohe, das Füllgut schonende Egalisierleistung ermöglicht wird.

Durch die Erfindung erhält man somit eine Vorrichtung zum Egalisieren von allseitig verschlossenen, mit Lebensmittelteilchen unterschiedlicher Art und Größe gefüllten Beuteln mit einem sich bewegenden Zuführband zum flachliegenden Transport der Beutel und mit einer Haltevorrichtung, die die Beutel im Bereich des Zuführbandes in ihrer Lage relativ zum Zuführband hält, sowie mit einem Schwingmechanismus, der im Bereich des Zuführbandes die Beutel in einer zur Transportebene parallelen Ebene in Schwingbewegung versetzt; diese Vorrichtung ist dadurch gekennzeichnet, daß zumindest ein plattenförmiges Glied an den Beutel auf seiner dem Zuführband gegenüberliegenden Seite mit beliebiger Stärke anlegbar ist und das plattenförmige Glied mit einer zur mittleren Transportbewegung der Beutel etwa gleich großen Geschwindigkeit bewegbar ist; ferner ist der Schwingmechanismus als Schwingvorrichtung entweder derart ausgebildet, daß die Schwingbewegung eine Kreisbewegung ist, die der Bewegungsrichtung des umlaufenden Zuführbandes überlagert ist (gemäß Anspruch 1), oder wird dadurch gebildet, daß das Zuführband zwei voneinander beabstandete, parallel laufende Förderbänder aufweist (gemäß Anspruch 2).

Die Schwingbewegung bei der erfindungsgemäßen Egalisiervorrichtung führt dazu, daß das Füllgut innerhalb des Beutels gleichsam aufschwimmt. Die einzelnen Teilchen des Füllgutes erfahren dabei von den in Beutelebene sich hin- und herbewegenden Beutelwänden lediglich einen schwachen Bewegungsimpuls in Beutelebene. Dadurch besteht die Möglichkeit, durch nur leichten, das Füllgut schonenden Druck von oben auf den Beutel, das Füllgut gleichmäßig im Beutel zu verteilen, ohne daß dabei das Füllgut oder der Beutel beschädigt würde; bei leichtem Druck auf das Füllgut kann dieses nämlich weder in die Beutelhülle eingedrückt, noch innerhalb des Beutels zerdrückt werden. Im Falle der beiden abwechselnd schneller oder langsamer laufenden Förderbänder wird der Beutel dadurch in seiner Ebene pendelartig hin- und herbewegt, was ebenfalls seinen Inhalt zu dem gewünschten "Aufschwingen" veranlaßt.

Die zu egalisierenden Beutel können entweder auf dem Zuführband liegend oder an dem Zuführband hängend transportiert werden.

Die hängende Transportierweise hat den Vorteil, daß sich die konstruktiven Bauteile des Zuführbandes und damit auch die Antriebseinrichtungen sowohl für die Bewegung des Zuführbandes in Transportrichtung, als auch für die Schwingbewegung oberhalb des Beutels befinden; vorhandene Staubpartikel oder aus möglicherweise schadhaften Beuteln herausfallendes Füllgut kann somit nicht in diese konstruktiven Bauteile hineinfallen und somit auch nicht zu Störungen führen. Allerdings ist ein gewisser konstruktiver Aufwand für die hängende Halterung der Beutel erforderlich. Insbesondere bei Beuteln aus sehr biegeweichem Material fällt dieser konstruktive Aufwand in wirtschaftlicher Hinsicht infolge des verbesserten Egalisiereffektes aber nicht ins Gewicht.

Als günstig hat es sich dabei herausgestellt, die Frequenz der Schwingbewegung umso höher zu wählen, je "mehliger" der Beutelinhalt ist.

Nach einem weiteren wesentlichen Merkmal der Erfindung ist der Beutel an dem Zuführband in seiner Lage relativ zum Zuführband während der Schwingbewegung gehalten, was insbesondere durch auf den Beutel einwirkenden Unterdruck auf technisch einfache Weise erfolgen kann.

Zu diesem Zweck können im Zuführband Öffnungen vorhanden sein, durch die hindurch der Beutel an dem Zuführband ansaugbar gehalten ist.

Da der Beutel vor seiner Egalisierung ungleich dick ist, was dazu führt, daß er nicht vollflächig an dem Zuführband aufliegt, sind in einer Fortbildung der Erfindung an dem Zuführband im Bereich der Öffnungen in der Höhe elastisch verformbare, hohlzylinderförmige Saugnäpfe angebracht, durch die hindurch der Beutel ansaugbar gehalten ist. Die in der Höhe elastisch verformbaren Saugnäpfe liegen dadurch auch an der nicht ebenen Beuteloberfläche an, wodurch die Saugleistung verbessert wird. Ein ähnlicher Effekt läßt sich durch eine entsprechend weiche Oberfläche des Zuführbandes erzielen.

Nach einer anderen Ausführungsform der Erfindung ist der Beutel mittels an ihn anlegbarer Glieder, die insbesondere klemmend auf ihn einwirken, auf dem Zuführband gehalten.

Als günstig hat es sich herausgestellt, das an den Beutel anlegbare, plattenförmige Glied als Förderband auszubilden.

Nach einer weiteren Ausführungsform dieses an den Beutel anlegbaren Gliedes erweist es sich als günstig, den Abstand zwischen dem Glied und dem Zuführband im in Transportrichtung vorderen Auslauf-Bereich des Zuführbandes kleiner als im hinteren Zulauf-Bereich desselben auszubilden, wobei der Abstand im vorderen Bereich der Dicke des egalisierten Beutels entspricht. Das von oben auf den Beutel einwirkende Band steigert damit seine Andrückwirkung mit fortschreitender Egalisierung des einzelnen Beutels.

Statt einer kontinuierlich sich steigernden, auf den Beutel einwirkenden Kraft kann diese auch periodisch veränderbar gewählt werden. Dies ist auf technisch einfache Weise bei dem auf den Beutel einwirkenden Förderband dadurch möglich, daß dieses um eine im in Transportrichtung vorderen, Auslaufbereich des Zuführbandes vorhandene Drehachse schwenkbar gelagert ist, wobei das Förderband in eine Auf- und Abschwenkbewegung bringbar ist, so daß es mit unterschiedlich großer Kraft gegen den Beutel angelegt werden kann.

Nach einer weiteren Ausführungsform dieses Förderbandes fällt die Drehachse des Förderbandes mit der Achse seiner vorderen Umlenkrolle zusammen, wobei diese Drehachse und die Drehachse der vorderen Umlenkrolle des Zuführbandes in vertikaler Richtung übereinanderstehend positioniert sind.

Auf konstruktiv einfache Weise läßt sich die ebene Schwingbewegung für die Beutel dadurch herstellen, daß der das Zuführband tragende Maschinenrahmen mittels eines Exzenter-Antriebs in diese ebene Schwingbewegung versetzt wird. Zur lagemäßigen Stabilisierung des sich bewegenden Rahmens ist dieser nach einer weiteren Ausgestaltung der Erfindung auf in der Ebene der Schwingbewegung elastisch verformbaren Lagerkörpern gehalten. Auf diese elastischen Lagerkörper kann in vorteilhafter Weise dadurch verzichtet werden, daß nicht an einer, sondern an mindestens zwei räumlich am Rahmen getrennten Stellen der Exzenter-Antrieb jeweils einwirkt. Dadurch wird der Rahmen durch den Exzenter-Antrieb an diesen zumindest zwei Stellen in allen seinen jeweiligen Lagen stabilisierend gehalten.

Weitere Ausgestaltungen und Vorteile der Erfindung sind den in den Ansprüchen weiterhin aufgeführten Merkmalen zu entnehmen.

## Kurze Beschreibung der Zeichnung

Die Erfindung wird im folgenden anhand des in der Zeichnung dargestellten Ausführungsbeispiels näher beschrieben und erläutert. Die der Beschreibung und der Zeichnung zu entnehmenden Merkmale können bei anderen Ausführungsformen der Erfindung einzeln für sich oder zu mehreren in beliebiger Kombination angewendet werden. Es zeigen:

Fig. 1   eine Seitenansicht der erfindungsgemäßen Egalisiervorrichtung, bei der die Beutel auf dem Zuführband aufliegen, das zusätzlich zu seiner Transportbewegung in eine horizontale Kreisbewegung versetzbar ist, während von oben auf die Beutel ein weiteres Förderband drückend einwirkt, und

Fig. 2   eine perspektivische Draufsicht auf das Zuführband und das Förderband gemäß Fig. 1.

## Wege zur Ausführung der Erfindung

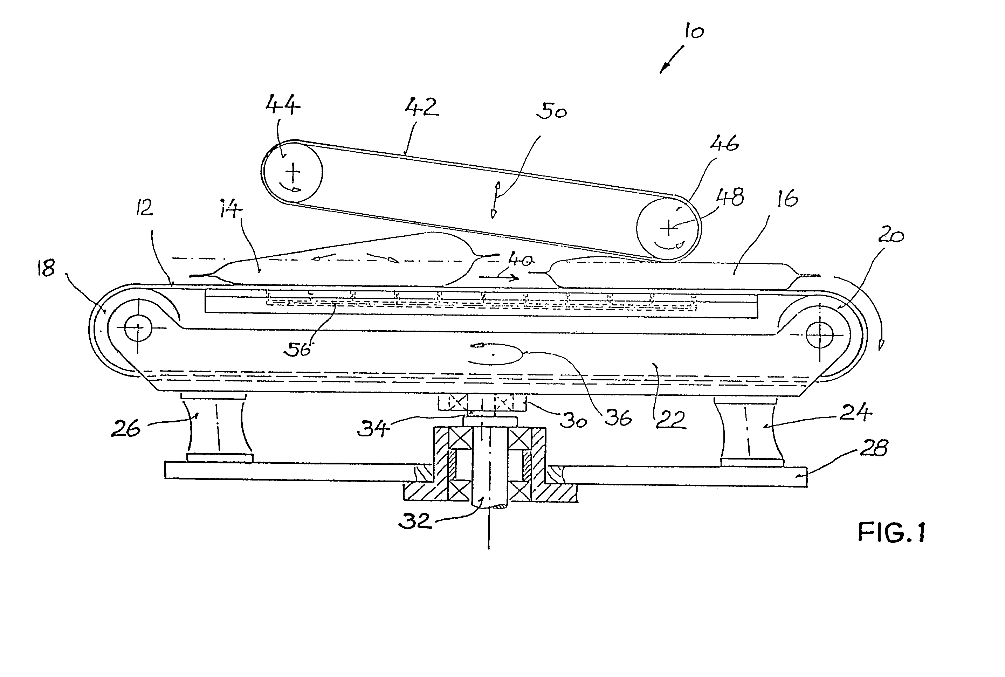

Die Egalisier-Vorrichtung 10 besitzt ein endlos umlaufendes Förderband 12. Von diesem Förderband 12 werden flachliegend Beutel 14, 16 von einer in der Zeichnung nicht dargestellten Abfüllstation zu einer ebenfalls nicht dargestellten Kartonierstation, in Fig. 1 von links nach rechts transportiert.

Die das Förderband tragende hintere Umlenkrolle 18 und vordere Umlenkrolle 20 werden von einem Rahmen 22 getragen, der seinerseits mit zwei elastisch verformbaren vorderen Füßen 24 und zwei elastisch verformbaren hinteren Füßen 26 auf einem Maschinengestell 28 aufruht. Der Rahmen 22 besitzt ein Lager 30, in das eine Welle 32 von unten mit einem Exzenterglied 34 eingreift. Durch Drehen der Welle 32 versetzt dieses Exzenterglied 34 das Lager 30 und damit auch den Rahmen 22 in eine um eine vertikale Achse sich drehende Kreisbewegung 36. Diese Kreisbewegung 36 wirkt sich auch auf die Umlenkrollen 18, 20 und damit auch auf das Förderband 12 aus. Das Förderband wird zusätzlich über einen nicht dargestellten Antrieb in eine lineare Vorwärtsbewegung 40 versetzt.

Im Abstand über dem Förderband 12 befindet sich ein weiteres endlos umlaufendes Förderband 42. Dieses Förderband 42 ist um eine hintere Umlenkrolle 44 und eine vordere Umlenkrolle 46 herumgeführt. Das Förderband 42 kann um die Achse 48 der vorderen Umlenkrolle 46 in eine Auf- und Abschwenkbewegung 50 versetzt werden.

Der Abstand der Achse 48 in vertikaler Richtung zum Förderband 12 ist so gewählt, daß zwischen dem Förderband 12 und dem Förderband 42 im Bereich der Achse 48 gerade ein gleichmäßig dicker Beutel 16 hindurchpaßt.

Im Förderband befinden sich parallel zur Bewegungsrichtung 40 jeweils im Bereich der beiden seitlichen Randbereiche des Förderbandes 12 jeweils zwei Reihen von Langlöchern 54. Der Abstand der beiden Reihen dieser Langlöcher 54 auf dem Förderband 12 in Querrichtung ist so gewählt, daß die Beutel 14, 16 dieser Langlöcher 54 in Querrichtung vollständig überdecken. Dicht unter dem Förderband 12 befindet sich unterhalb der Langlöcher 54 Zuführkanäle 56, die vom Rahmen 22 konstruktiv gehalten werden. In diesem Zuführkanal 56 sind ebenfalls zwei Reihen von Öffnungen 58 vorhanden. Jede Reihe der Öffnungen 58 befindet sich genau unterhalb der jeweiligen Reihe der Langlöcher 54 des Zuführbandes.

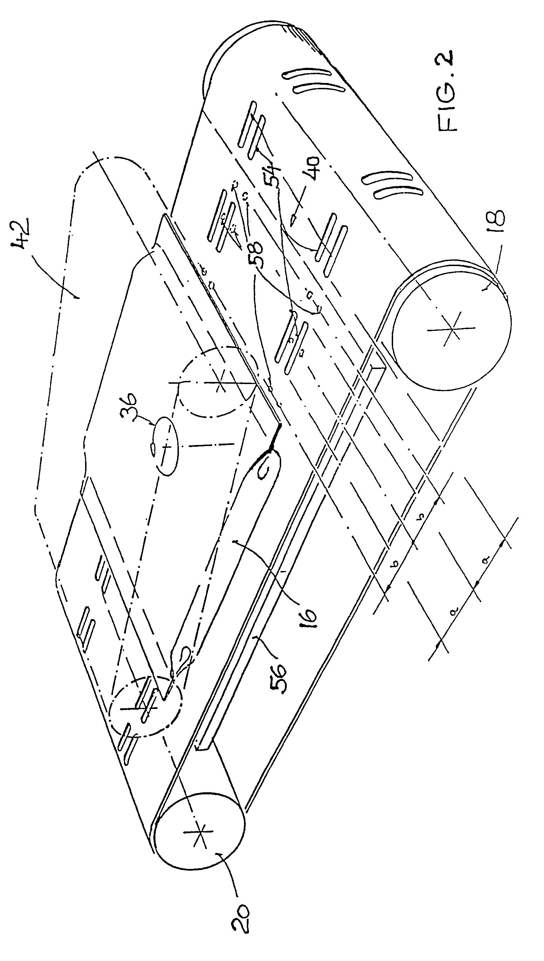

Die Länge eines jeden Langloches 54 besitzt ebenfalls wie der gegenseitige Abstand der Langlöcher 54 in Bewegungsrichtung 40 das Maß a. Der gegenseitige Abstand der Öffnungen 58 in dem Zuführkanal 56 in dieser Bewegungsrichtung 40 besitzt das Maß b, wobei a etwa das 0,75-fache von b ist. Speziell bei der in Fig. 2 dargestellten Ausführungsform beträgt das Maß a 15 mm und das Maß b 20 mm. Der Kreisdurchmesser der Öffnungen 58 beträgt vier mm, während der kleinere Durchmesser der Langlöcher 54 acht mm beträgt. Dadurch ist sichergestellt, daß sich während der Vorwärtsbewegung 40 des Förderbandes 12 immer ein Teil der Langlöcher 54 über einigen Öffnungen 58 befindet.

Durch Ansaugen von Luft von oben durch die Langlöcher 54 und die Öffnungen 58 in die Zuführkanäle 56 hinein, werden die auf dem Förderband 12 liegenden Beutel 14, 16 an dem Förderband 12 angesaugt. Dadurch werden die Beutel 14, 16 während ihrer Vorwärtsbewegung 40 und ihrer gleichzeitigen Kreisbewegung 36 relativ zum Förderband unverrückbar gehalten.

## Patentansprüche

1. Vorrichtung zum Egalisieren von allseitig verschlossenen, mit Lebensmittelteilchen unterschiedlicher Art und Größe gefüllten Beuteln mit

- einem sich bewegenden Zuführband (12) zum flachliegenden Transport der Beutel (14, 16),
- einer Haltevorrichtung, die die Beutel (14, 16) im Bereich des Zuführbandes (12) in ihrer Lage relativ zum Zuführband hält,
- einem Schwingmechanismus, der im Bereich des Zuführbandes (12) die Beutel (14, 16) in einer zur Transportebene parallelen Ebene in Schwingbewegung versetzt, *dadurch gekennzeichnet, daß*
- der Schwingmechanismus als Schwingvorrichtung derart ausgebildet ist, daß die Schwingbewegung (36) eine Kreisbewegung ist, die der Bewegungsrichtung des Zuführbandes überlagert ist,
- zumindest ein plattenförmiges Glied (42) an den Beutel (14, 16) auf seiner dem Zuführband (12) gegenüberliegenden Seite mit beliebiger Stärke anlegbar ist,
- das plattenförmige Glied (42) mit einer zur mittleren Transportbewegung (40) der Beutel (14, 16) etwa gleich großen Geschwindigkeit bewegbar ist.

2. Vorrichtung nach dem Oberbegriff von Anspruch 1, *dadurch gekennzeichnet, daß*

- der Schwingmechanismus als Schwingvorrichtung dadurch gebildet wird, daß das Zuführband (12) zwei voneinander beabstandete, parallel laufende Förderbänder aufweist, von denen abwechselnd das eine oder das andere Förderband schneller oder langsamer als das jeweils andere Förderband fortbewegbar ist,
- zumindest ein plattenförmiges Glied an den Beutel auf seiner dem Zuführband gegenüberliegenden Seite mit beliebiger Stärke anlegbar ist,
- das plattenförmige Glied mit einer zur mittleren Transportbewegung der Beutel in etwa gleich großen Geschwindigkeit bewegbar ist.

3. Vorrichtung nach Anspruch 1 oder 2, *dadurch gekennzeichnet, daß* der Beutel (14, 16) auf dem Zuführband (12) liegend oder hängend transportierbar ist.

4. Vorrichtung nach Anspruch 1 oder 2, *dadurch gekennzeichnet, daß* die Frequenz der Schwingbewegung umso höher ist, je "mehliger" der Beutelinhalt ist.

5. Vorrichtung nach Anspruch 1 oder 2, *dadurch gekennzeichnet, daß* der Beutel (14, 16) an dem Zuführband (12) in seiner Lage relativ zum Zuführband während der Schwingbewegung durch auf ihn einwirkenden Unterdruck gehalten ist.

6. Vorrichtung nach Anspruch 5, *dadurch gekennzeichnet, daß* in dem Zuführband Öffnungen (54) sind, durch die hindurch der Beutel an dem Zuführband ansaugbar gehalten ist.

7. Vorrichtung nach Anspruch 6, *dadurch gekennzeichnet, daß* an dem Zuführband im Bereich der Öffnungen (54) in der Höhe elastisch verformbare, hohlzylinderförmige Saugnäpfe angebracht sind, durch die hindurch der Beutel (14, 16) an dem Zuführband (12) ansaugbar gehalten ist.

8. Vorrichtung nach Anspruch 1 oder 2, *dadurch gekennzeichnet, daß* das plattenförmige Glied ein Förderband (42) ist, wobei der Abstand zwischen dem Glied (42) und dem Zuführband (12) im in Transportrichtung (40) vorderen Auslaufbereich des Zuführbandes (12) kleiner ist als im hinteren Zulaufbereich desselben und der Abstand im vorderen Bereich der Dicke des egalisierten Beutels (16) entspricht.

9. Vorrichtung nach Anspruch 8, *dadurch gekennzeichnet, daß* das Förderband (42) um eine im Transportrichtung (40) vorderen Auslaufbereich des Zuführbandes (12) vorhandene Drehachse schwenkbar gelagert ist, wobei das Förderband (42) in eine Auf- und Abschwenkbewegung bringbar ist, so daß es mit unterschiedlich großer Kraft gegen den Beutel anlegbar ist.

10. Vorrichtung nach Anspruch 9, *dadurch gekennzeichnet, daß* die Drehachse des Förderbandes (42) mit der Achse (48) seiner vorderen Umlenkrolle (46) zusammenfällt und diese Drehachse (48) und die Drehachse der vorderen Umlenkrolle (20) des Zuführbandes (12) in vertikaler Richtung übereinanderstehend positioniert sind.

11. Vorrichtung nach Anspruch 1, *dadurch gekennzeichnet, daß* die Umlenkrollen (18, 20) für das umlaufende Zuführband (12) von einem Rahmen (22) gehalten sind, der über einen ExzenterAntrieb (30, 32, 34) in die ebene Schwingbewegung bringbar ist.

12. Vorrichtung nach Anspruch 11, *dadurch gekennzeichnet, daß* der Exzenter-Antrieb (30, 32, 34) von der dem Zuführband (12) entgegengesetzten Seite des Rahmens (22) auf den Rahmen (22) einwirkt.

13. Vorrichtung nach Anspruch 11 oder 12, *dadurch gekennzeichnet, daß* der Exzenter-Antrieb an mindestens zwei räumlich am Rahmen (22) getrennten Stellen auf den Rahmen einwirkt, so daß der Rahmen (22) durch den Exzenter-Antrieb an diesen beiden Stellen in allen seinen jeweiligen Lagen stabilisierend gehalten ist.

**Claims**

1. Device for the equalization of bags closed on all sides and filled with foodstuff particles of differing nature and size, with

- a moving delivery belt (12) for the flat transport of the bags (14, 16),
- a holding device which, in the region of the delivery belt (12), keeps the bags (14, 16) in their position relative to the delivery belt,
- an oscillating mechanism which, in the region of the delivery belt (12), sets the bags (14, 16) in oscillatory motion in a plane parallel to the transport plane, characterized in that
- the oscillating mechanism is designed as an oscillating device, in such a way that the oscillatory motion (36) is a circular motion which is superposed on the direction of movement of the delivery belt,
- at least one plate-like member (42) can be laid with any strength against the bag (14, 16) on its side located opposite the delivery belt (12),
- the plate-like member (42) is movable at a speed approximately equal to the mean transport movement (40) of the bags (14, 16).

2. Device according to the pre-characterizing clause of Claim 1, characterized in that

- the oscillating mechanism is formed as an oscillating device by virtue of the fact that the delivery belt (12) has two conveyor belts arranged at a distance from one another and running in parallel and one or other conveyor belt of which is alternately mowable more quickly or more slowly than the other particular conveyor belt,
- at least one plate-like member can be laid with any strength against the bag on its side located opposite the delivery belt,
- the plate-like member is mowable at a speed approximately equal to the mean transport movement of the bags.

3. Device according to Claim 1 or 2, characterized in that the bag (14, 16) can be transported on the delivery belt (12) either lying or hanging.

4. Device according to Claim 1 or 2, characterized in that the frequency of the oscillatory motion is higher, the "flourier" the bag content.

5. Device according to Claim 1 or 2, characterized in that the bag (14, 16) is held on the delivery belt (12) in its position relative to the delivery belt, during the oscillatory motion, by means of a vacuum acting on it.

6. Device according to Claim 5, characterized in that in the delivery belt there are orifices (54), through which the bag is held against the delivery belt by suction.

7. Device according to Claim 6, characterized in that attached to the delivery belt in the region of the orifices (54) are hollow-cylindrical suction cups which are elastically deformable in terms of their height and through which the bag (14, 16) is held against the delivery belt (12) by suction.

8. Device according to Claim 1 or 2, characterized in that the plate-like member is a conveyor belt (42), and the distance between the member (42) and the delivery belt (12) in the exit region of the delivery belt (12), at the front in the direction of transport (40), is shorter than in the rear entry region of the latter, the distance in the front region corresponding to the thickness of the equalized bag (16).

9. Device according to Claim 8, characterized in that the conveyor belt (42) is mounted pivotably about an axis of rotation located in the exit region of the delivery belt (12), at the front in the direction of transport (40), and the conveyor belt (42) can be set in an up-and-down swinging motion, so that it can be laid against the bag with varying force.

10. Device according to Claim 9, characterized in that the axis of rotation of the conveyor belt (42) coincides with the axis (48) of its front deflecting roller (46), and this axis of rotation (48) and the axis of rotation of the front deflecting roller (20) of the delivery belt (12) are positioned above one another in the vertical direction.

11. Device according to Claim 1, characterized in that the deflecting rollers (18, 20) for the rotating delivery belt (12) are held by a frame (22) which can be set in the plane oscillatory motion via an eccentric drive (30, 32, 34).

12. Device according to Claim 11, characterized in that the eccentric drive (30, 32, 34) acts on the frame (22) from that side of the frame (22) opposite the delivery belt (12).

13. Device according to Claim 11 or 12, characterized in that the eccentric drive acts on the frame at at least two points spatially separated on the frame (22), so that the frame (22) is held in all its particular positions with a stabilizing effect by the eccentric drive at these two points.

**Revendications**

1. Dispositif pour l'égalisation de sachets remplis de particules de matières alimentaires de genres et de grandeurs différents, avec

- une bande d'amenée (12) se mouvant, pour le transport à plat des sachets (14,16);
- un dispositif d'arrêt qui maintient les sachets (14, 16), dans la région de la bande d'amenée (12), dans leurs positions par rapport à la bande d'amenée;

- un mécanisme à bascule qui, dans la région de la bande d'amenée (12), met les sachets (14, 16) dans un mouvement d'oscillation dans un plan parallèle au plan de transport caractérisé par le fait que

- le mécanisme à bascule est réalisé comme dispositif d'oscillation de façon telle que le mouvement oscillatoire (36) soit un mouvement circulaire qui est superposé à la direction de mouvement de la bande d'amenée;

- au moins un organe (12) en forme de plaque peut être appliqué aux sachets (14, 16) de leur côté opposé à la bande d'amenée (12), avec une force variable;

- l'organe en forme de plaque (42) est mobile avec une vitesse à peu près d'égale grandeur à la vitesse moyenne de transport du mouvement de transport (40) des sachets (14, 16).

2. Dispositif suivant le préambule de la revendication 1, caractérisé en ce que

- le mécanisme à bascule est réalisé en dispositif d'oscillation par le fait que la bande d'amenée (12) présente deux bandes transporteuses s'étendant parallèlement l'une à l'autre, à distance l'une de l'autre, dont alternativement l'une et l'autre bande transporteuse peut être avancée plus rapidement ou plus lentement que chaque fois l'autre bande transporteuse;

- au moins un organe en forme de plaque est applicable au sachet, avec une force variable, de son côté opposé à la bande transporteuse;

- l'organe en forme de plaque est mobile à une vitesse à peu près d'égale grandeur que le mouvement de transport moyen des sachets.

3. Dispositif suivant la revendication 1 ou la revendication 2, caractérisé en ce que le sachet (14, 16) peut être transporté soit étendu sur la bande d'amenée (12), soit suspendu à celle-ci.

4. Dispositif suivant la revendication 1 ou la revendication 2, caractérisé en ce que la fréquence du mouvement oscillatoire est d'autant plus grande que le contenu des sachets est plus "farineux".

5. Dispositif suivant la revendication 1 ou la revendication 2, caractérisé en ce que le sachet (14, 16) sur la bande d'amenée (12) est maintenu dans sa position par rapport à la bande d'amenée pendant le mouvement d'oscillation par une dépression agissant sur lui.

6. Dispositif suivant la revendication 5, caractérisé en ce que, dans la bande d'amenée, il y a des ouvertures (54) à travers lesquelles le sachet peut être maintenu par aspiration sur la bande d'amenée.

7. Dispositif suivant la revendication 6, caractérisé en ce que sur la bande d'amenée, dans la région des ouvertures (54) sont adaptés des dés d'aspiration cylindriques creux élastiquement déformables en hauteur, à travers lesquels le sachet (14, 16) peut être maintenu par aspiration sur la bande d'amenée (12).

8. Dispositif suivant la revendication 1 ou la revendication 2, caractérisé en ce que l'organe en forme de plaque est une bande transporteuse, où la distance entre l'organe (42) et la bande d'amenée (12) est, dans la région de départ antérieure dans la direction du transport (40), plus petite que dans la région postérieure d'arrivée de celle-ci et correspond à la distance dans la région antérieure de l'épaisseur du sachet égalisé.

9. Dispositif suivant la revendication 8, caractérisé en ce que la bande transporteuse (42) est montée à pivotement autour d'un axe existant dans la région de départ, antérieure dans le sens du transport, de la bande transporteuse (12), la bande transporteuse (42) pouvant être mise dans un état de mouvement de pivotement vers le haut et vers le bas, en sorte qu'elle peut s'appliquer contre le sachet avec une force de grandeur différente.

10. Dispositif suivant la revendication 9, caractérisé en ce que l'axe de rotation de la bande transporteuse (42) coïncide avec l'axe (48) de son rouleau de renvoi antérieur (46) et en ce que cet axe de rotation (48) et l'axe de rotation du rouleau de renvoi antérieur (20) de la bande d'amenée (12) sont positionnés l'un au-dessus de l'autre en direction verticale.

11. Dispositif suivant la revendication 1, caractérisé en ce que les rouleaux de renvoi (18, 20) pour la bande d'amenée tournante (12) sont maintenus par un cadre (22) qui peut être mis en mouvement d'oscillation plan par une transmission à excentrement (30, 32, 34).

12. Dispositif suivant la revendication 11, caractérisé en ce que la transmission à excentrement (30, 32, 34) agit sur le cadre (22) du côté du cadre (22) opposé à la bande d'amenée (12).

13. Dispositif suivant la revendication 11 ou la revendication 12, caractérisé en ce que la transmission à excentrement agit en au moins deux positions séparées dans l'espace sur le cadre (22), en sorte que le cadre (22) est maintenu de manière stabilisante par la transmission à excentrement en ces deux endroits, dans toutes les positions qu'il prend chaque fois.

FIG.1

FIG. 2